# EUROPEAN PATENT SPECIFICATION

(11) **EP 2 232 094 B1**
(45) Date of publication and mention of the grant of the patent: **03.08.2011**
(21) Application number: 08865805.9
(22) Date of filing: 19.12.2008
(51) Int. Cl.: F16F 9/36, F16F 9/32

(54) **DAMPING-ADJUSTABLE SHOCK-ABSORBER WITH A DOUBLE-FRONT-SEALED DEVICE FOR CONNECTION BETWEEN AN INTERMEDIATE TUBE AND A CONTROL VALVE**
DÄMPFUNGSEINSTELLBARER STOSSDÄMPFER MIT DOPPELFRONTVERSIEGELTER VORRICHTUNG ZUR VERBINDUNG ZWISCHEN EINEM ZWISCHENROHR UND EINEM STEUERVENTIL
AMORTISSEUR A AMORTISSEMENT AJUSTABLE DOTE D'UN DOUBLE DISPOSITIF FRONTAL ETANCHE POUR LE RACCORDEMENT D'UN TUBE INTERMEDIAIRE ET D'UNE SOUPAPE DE COMMANDE

(30) Priority: 21.12.2007 IT TO20070932
(43) Date of publication of application: 29.09.2010
(73) Proprietor: Sistemi Sospensioni S.p.A., 20011 Corbetta (MI) (IT)
(72) Inventor: BRUNO, Walter, I-14100 Asti (IT); GATTA, Pasquale, I-10141 Torino (IT); SPINA, Michele, I-10136 Torino (IT)
(74) Representative: Rondano, Davide
(86) International application number: PCT/IB2008/055449
(87) International publication number: WO 2009/081363

(56) References cited:
- WO-A-2005/036013
- DE-A1- 10 355 151
- DE-A1- 19 733 622
- DE-C1- 19 527 849
- US-A- 5 439 085
- US-A- 6 035 979

## Description

The present invention relates in general to a damping-adjustable shock-absorber intended to be used for instance in an active or semi-active suspension system of a motor vehicle, and more in particular to a sealed connection device between an intermediate tube and a control valve of the shock-absorber.

Nowadays, there is a wider and wider use, particularly in the motor-vehicle field, of damping-adjustable shock-absorbers which are capable of varying their damping characteristics under control of an electronic control unit to change the behaviour of the suspension system of the vehicle depending for instance on the conditions of the road surface and on the running conditions of the vehicle. A typical damping-adjustable shock-absorber comprises:
a pressure tube enclosing a pressure chamber in which a damping fluid (oil) is contained;
a piston slidably mounted within the pressure chamber of the pressure tube so as to split it into a lower pressure chamber and an upper pressure chamber;
an outer tube;
an intermediate tube which is fitted onto the pressure tube and encloses a by-pass chamber communicating with the upper pressure chamber through communication holes provided in the pressure tube; and
a control valve, typically a solenoid valve, which is connected to the intermediate tube and is arranged to control the flow of the fluid between the pressure chamber and the by-pass chamber.

International Patent application WO2005/036013 discloses a damping-adjustable shock-absorber comprising:
a collar which is secured to the intermediate tube and forms a base portion extending parallel to the intermediate tube and a tubular portion extending perpendicularly to the intermediate tube;
a control valve having a valve seat which in the assembled condition is received within the collar; and
an O-ring arranged in a circumferential groove of the valve seat so as to be kept in contact against the tubular portion of the collar to ensure a sealed connection between the control valve and the intermediate tube.

A further sealed connection arrangement between the intermediate tube and the control valve of a damping-adjustable shock-absorber is known from Us Patent US6035979. According to this prior art document, the intermediate tube has a connection opening in which a fitting collar for the control valve is secured by caulking. An O-ring ensuring a sealed connection between the valve and the intermediate tube is radially (wherein the terms "radial" and "axial" are to be intended, in the following description and claims, as referred to the axis of the control valve, that is to say, to an axis extending perpendicularly to the axis of the shock-absorber) interposed between the fitting collar and an attachment portion of the control valve.

In both the above-mentioned arrangements, the connection between the intermediate tube and the control valve involves a single radial sealing member consisting in both cases in an O-ring.

It is therefore an object of the present invention to provide a damping-adjustable shock absorber having a sealed connection device between the intermediate tube and the control valve which has a more compact structure, which can be assembled in an easier way and which can be manufactured at a lower cost than the prior art discussed above.

This and other objects are fully achieved according to the invention by virtue of a damping-adjustable shock-absorber having the characteristics defined in the enclosed claim 1.

In short, the invention is based on the idea of providing a sealed connection device between the intermediate tube and the control valve comprising:
a spacer body axially interposed between the intermediate tube and the control valve;
a first front sealing member in contact with a front face of the control valve; and
a second front sealing member in contact with the outer cylindrical surface of the intermediate tube.

By virtue of the fact that the two front sealing members provided between the intermediate tube and the control valve form a double front seal, a damping adjustable shock-absorber according to the invention is capable of ensuring a correct oil flow, and accordingly a correct pressure transmission, between the intermediate tube and the control valve. Moreover, a damping-adjustable shock-absorber according to the invention has a more compact structure, is easier to assemble and has a lower manufacturing cost than the prior art discussed above.

Further characteristics and advantages of the invention will become more evident from the following detailed description, given purely by way of non-limiting example with reference to the appended drawings, in which:
Figure 1 is an axial section view of a damping-adjustable shock-absorber provided with a sealed connection device between the intermediate tube and the control valve according to a first preferred embodiment of the invention;
Figure 2 is an axial section view on an enlarged scale showing in detail the sealed connection device of Figure 1;
Figure 3 is an axial section view on an enlarged scale showing in detail a variant of embodiment of the sealed connection device between the intermediate tube and the control valve; and
Figure 4 is an axial section view on an enlarged scale showing in detail a further variant of embodiment of the sealed connection device between the intermediate tube and the control valve.

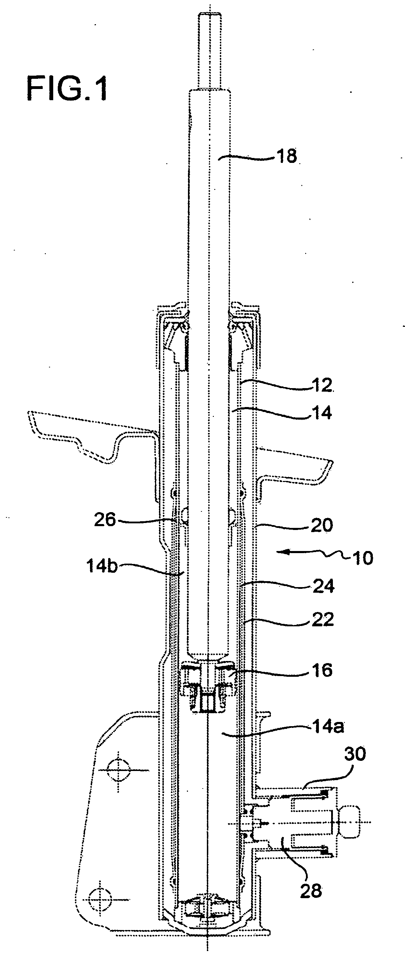

With reference first to Figure 1, a damping-adjustable shock-absorber intended to be used in particular in an active or semi-active suspension system for a motor vehicle is generally indicated 10 and comprises, in per-se-known manner:
a pressure tube 12 enclosing a pressure chamber 14 in which a damping fluid, typically oil, is contained;
a plunger 16 slidably mounted within the pressure chamber 14 of the pressure tube 12 so as to split it into a lower pressure chamber 14a and an upper pressure chamber 14b;
a rod 18 which carries at an end thereof the plunger16 and projects at the opposite end from the pressure tube 12;
an outer tube 20;
an intermediate tube 22 which is fitted onto the pressure tube 12 and encloses a by-pass chamber 24 communicating with the upper pressure chamber 14b through communication holes 26 provided in the pressure tube 12; and
a control valve 28, typically a solenoid valve, which is connected to the intermediate tube 22 and is arranged to control the flow of the damping fluid between the pressure chamber 14 and the by-pass chamber 24.

The control valve 28 is secured to the outer tube 20 so as to extend substantially perpendicularly to the axis of the outer tube, that is to say, perpendicularly to the axis of the shock-absorber. In particular, in the proposed embodiments the valve 28 is threaded into an internally threaded tubular attachment element 30 which is in turn rigidly connected, for instance by welding, to the outer tube 20.

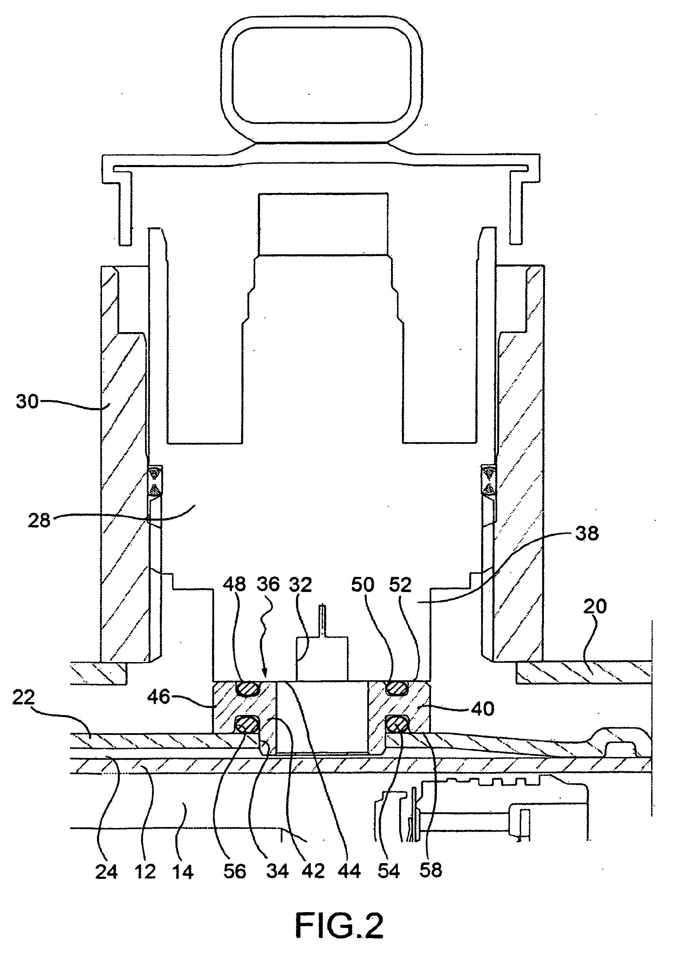

With reference in particular to Figures 2 to 4, the control valve 28 has an inlet 32 in fluid communication with the by-pass chamber 22 through an opening 34 formed in the intermediate tube 22.

A sealed connection device 36 is axially interposed between the intermediate tube 22 and the control valve 28 at the opening 34 to allow the damping fluid to flow without leakage from the by-pass chamber 24 to the inlet 32 of the control valve 28 and vice versa. As will be explained in detail here below, the sealed connection device 36 is configured so as to form a double front seal, on the one hand with the intermediate tube 22 and on the other hand with a valve body 38 of the control valve 28.

In the embodiment of Figure 2, the sealed connection device 36 comprises a spacer body 40 forming a radially inner tubular portion 42 which at a first end (upper end, when seen by the observer of Figure 2) is in abutment against a front face 44 of the valve body 38 and at the opposite end (lower end, when seen form the observer of Figure 2) projects into the by-pass chamber 24 of the intermediate tube 22 through the opening 34, and a radial flange portion 46 which extends radially from the tubular portion 42 and is in abutment at its opposite axial ends against the front face 44 of the valve body 38 and against the outer cylindrical surface of the intermediate tube 22. The sealed connection device 36 further comprises a first front sealing member 48, which is formed in this case as an O-ring and is received in a first toroidal groove 50 provided on a first axial face 52 (upper face, when seen by the observer of Figure 2) of the flange portion 46 of the spacer body 40 so as to seal against the front face 44 of the valve body 38, and a second front sealing member 54, which is formed in this case as an O-ring as well and is received in a second toroidal groove 56 provided on a second axial face 58 (lower face, when seen by the observer of Figure 2) of the flange portion 46 of the spacer body 40 so as to seal against the outer cylindrical surface of the intermediate tube 22. Preferably, the spacer body 40 is formed as a single piece of metal, while the two O-rings 48 and 54 are made of elastomeric material.

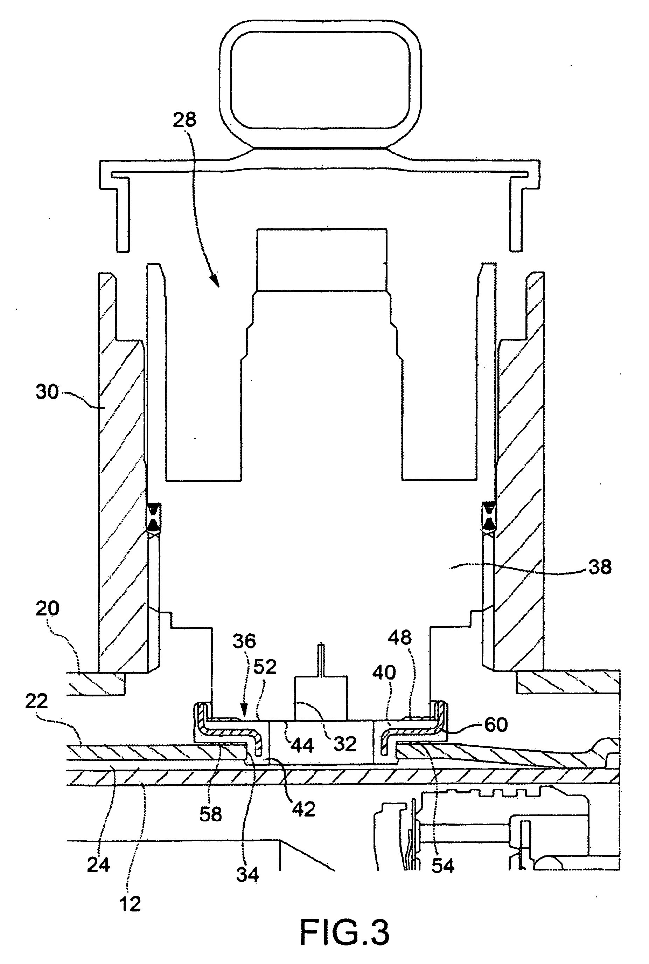

A variant of embodiment of the sealed connection device according to the invention is illustrated in Figure 3, where parts and elements identical or corresponding to those of Figure 2 have been given the same reference numerals. Also the sealed connection device 36 of Figure 3 comprises a spacer body 40, a first front sealing member 48 in contact with the front face 44 of the valve body 38 and a second front sealing member 54 in contact with the outer cylindrical surface of the intermediate tube 22. In this case, the spacer body 40 is made of elastomeric material, internally reinforced by a metal core 60, and forms integrally the two front sealing members 48 and 54. More precisely, the first front sealing member 48 is formed on a first axial face 52 (upper face, when seen by the observer of Figure 3) of the spacer body 40, while the second front sealing member 54 is formed on an opposite axial face 58 (lower face, when seen by the observer of Figure 3). As in the embodiment of Figure 2, the spacer body 40 also forms a radially inner tubular portion 42 which projects partially into the by-pass chamber 24 of the intermediate tube 22 through the opening 34.

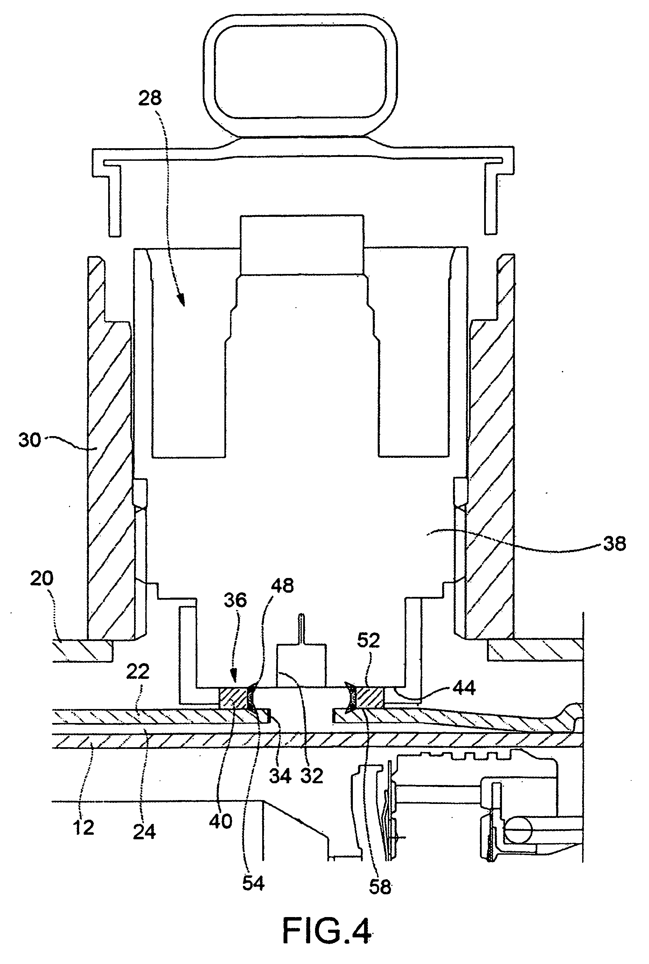

A further variant of embodiment of the sealed connection device according to the invention is illustrated in Figure 4, where parts and elements identical or corresponding to those of Figures 2 and 3 have been given the same reference numerals. In this case, the spacer body 40 is simply a ring arranged around the opening 34 of the intermediate tube 22 in contact with a first axial face 52 thereof against the front face 44 of the valve body 38 and with an opposite axial face 58 thereof against the outer cylindrical surface of the intermediate tube itself. The first and second front sealing members 48 and 54 are formed in this case by a single piece of elastomeric material of annular shape which is secured to the inner cylindrical surface of the spacer body 40.

Naturally, the principle of the invention remaining unchanged, the embodiments and constructional details may vary widely with respect to those described and illustrated purely by way of non-limiting example.

## Claims

1. Damping-adjustable shock-absorber (10) comprising a pressure tube (12), an outer tube (20), an intermediate tube fitted onto the pressure tube (12), a control valve (28) for controlling the flow of a damping fluid to/from the intermediate tube (22) and a sealed connection device (36) for sealed connection of the control valve (28) with the intermediate tube (22),
**characterized in that** the sealed connection device (36) comprises a spacer body (40) axially interposed between the intermediate tube (22) and the control valve (28), a first front sealing member (48) in contact with a front face (44) of the control valve (28), and a second front sealing member (54) in contact with the outer cylindrical surface of the intermediate tube (22).

2. Shock-absorber according to claim 1, wherein the first front sealing member (48) is formed by an O-ring received in a first toroidal groove (50) provided on a first axial face (52) of the spacer body (40) in contact with a front face (44) of a valve body (38) of the control valve (28).

3. Shock-absorber according to claim 1 or claim 2, wherein the second front sealing member (54) is formed by an O-ring received in a second toroidal groove (56) provided on a second axial face (58) of the spacer body (40) in contact with the outer cylindrical surface of the intermediate tube (22).

4. Shock-absorber according to claim 2 or clam 3, wherein the spacer body (40) is formed as a single piece of metal.

5. Shock-absorber according to claim 1, wherein the spacer body (40) is made of elastomeric material and forms integrally the first and second front sealing members (48, 54).

6. Shock-absorber according to claim 5, wherein the first and second front sealing members (48, 54) are formed on first and second axial faces (52, 58) of the spacer body (40), respectively.

7. Shock-absorber according to claim 5 or claim 6, wherein the spacer body (40) includes a reinforcing metal core (60).

8. Shock-absorber according to claim 1, wherein the spacer body (40) is formed by a ring arranged in contact with a first axial face (52) thereof against a front face (44) of a valve body (38) of the control valve (28) and with an opposite axial face (58) thereof against the outer cylindrical surface of the intermediate tube (22), and wherein the first and second front sealing members (48, 54) are formed by a single piece of elastomeric material of annular shape which is secured to the inner cylindrical surface of the spacer body (40).

## Patentansprüche

1. Dämpfungseinstellbarer Stoßdämpfer (10) mit einem Druckrohr (12), einem Außenrohr (20), einem auf dem Druckrohr (12) befestigten Zwischenrohr, einem Steuerventil (28) zum Steuern des Stroms eines Dämpfungsmediums zu/aus dem Zwischenrohr (22) und einer versiegelten Verbindungsvorrichtung (36) für die versiegelte Verbindung des Steuerventils (28) mit dem Zwischenrohr (22),
**dadurch gekennzeichnet, dass** die versiegelte Verbindungsvorrichtung (36) einen axial zwischen das Zwischenrohr (22) und das Steuerventil (28) geschalteten Abstandskörper (40), ein erstes frontversiegelndes Element (48) im Kontakt mit einer vorderen Fläche (44) des Steuerventils (28) und ein zweites frontversiegelndes Element (54) im Kontakt mit der äußeren zylindrischen Oberfläche des Zwischenrohrs (22) aufweist.

2. Stoßdämpfer gemäß Anspruch 1, bei dem das erste frontversiegelnde Element (48) durch einen O-Ring gebildet wird, der von einer ersten ringförmigen Nut (50) aufgenommen wird, die auf einer ersten axialen Fläche (52) des Abstandskörpers (40) im Kontakt mit einer vorderen Fläche (44) eines Ventilkörpers (38) des Steuerventils (28) hergestellt wird.

3. Stoßdämpfer gemäß Anspruch 1 oder 2, bei dem das zweite frontversiegelnde Element (54) durch einen O-Ring gebildet wird, der von einer zweiten ringförmigen Nut (56) aufgenommen wird, die auf einer zweiten axialen Fläche (58) des Abstandskörpers (40) im Kontakt mit der äußeren zylindrischen Oberfläche des Zwischenrohrs (22) hergestellt wird.

4. Stoßdämpfer gemäß Anspruch 2 oder 3, bei dem der Abstandskörper (40) als ein einziges Stück aus Metall gebildet wird.

5. Stoßdämpfer gemäß Anspruch 1, bei dem der Abstandskörper (40) aus Elastomermaterial hergestellt ist und in einem Stück das erste und das zweite frontversiegelnde Element (48, 54) bildet.

6. Stoßdämpfer gemäß Anspruch 5, bei dem das erste und das zweite frontversiegelnde Element (48, 54) auf der ersten bzw. der zweiten axialen Fläche (52, 58) des Abstandskörpers (40) gebildet werden.

7. Stoßdämpfer gemäß Anspruch 5 oder 6, bei dem der Abstandskörper (40) einen verstärkenden Metallkern (60) besitzt.

8. Stoßdämpfer gemäß Anspruch 1, bei dem der Abstandskörper (40) durch einen Ring gebildet wird, der im Kontakt mit einer ersten axialen Fläche (52) davon gegen eine vordere Fläche (44) eines Ventilkörpers (38) des Steuerventils (28) und mit einer gegenüberliegenden axialen Fläche (58) davon gegen die äußere zylindrische Oberfläche des Zwischenrohrs (22) angeordnet ist und bei dem das erste und das zweite frontversiegelnde Element (48, 54) durch ein einziges Stück aus Elastomermaterial in Ringform gebildet werden, das an der inneren zylindrischen Oberfläche des Abstandskörpers (40) festgehalten wird.

## Revendications

1. Amortisseur à amortissement ajustable (10) comprenant un tube de pression (12), un tube externe (20, un tube intermédiaire ajusté sur le tube de pression (12), une soupape de commande (28) pour commander l'écoulement d'un fluide d'amortissement en direction/à partir du tube intermédiaire (22) et un dispositif de raccordement étanche (36) pour le raccordement étanche de la soupape de commande (28) avec le tube intermédiaire (22),
**caractérisé en ce que** le dispositif de raccordement étanche (36) comprend un corps d'espacement (40) interposé axialement entre le tube intermédiaire (22) et la soupape de commande (28), un premier élément frontal d'étanchéité (48) en contact avec une face frontale (44) de la soupape de commande (28), et un deuxième élément frontal d'étanchéité (54) en contact avec la surface cylindrique extérieure du tube intermédiaire (22).

2. Amortisseur selon la revendication 1, dans lequel le premier élément frontal d'étanchéité (48) est formé par un anneau torique placé dans une première gorge toroïdale (50) ménagée sur une première face axiale (52) du corps d'espacement (40) en contact avec une face frontale (44) d'un corps de soupape (38) de la soupape de commande (28).

3. Amortisseur selon la revendication 1 ou la revendication 2, dans lequel le deuxième élément frontal d'étanchéité (54) est formé par un anneau torique placé dans une deuxième gorge toroïdale (56) prévue dans une deuxième face axiale (58) du corps d'espacement (40) en contact avec la surface cylindrique extérieure du tube intermédiaire (22).

4. Amortisseur selon la revendication 2 ou la revendication 3, dans lequel le corps d'espacement (40) est formé par une pièce unique de métal.

5. Amortisseur selon la revendication 1, dans lequel le corps d'espacement (40) est réalisé en matériau élastomère et forme intégralement les premier et deuxième éléments frontaux d'étanchéité (48,54).

6. Amortisseur selon la revendication 5, dans lequel les premier et deuxième éléments frontaux d'étanchéité (48, 54) sont formés sur les première et deuxième faces axiales (52, 58) du corps d'espacement (40), respectivement.

7. Amortisseur selon la revendication 5 ou la revendication 6, dans lequel le corps d'espacement (40) comporte une âme métallique de renforcement (60).

8. Amortisseur selon la revendication 1, dans lequel le corps d'espacement (40) est formé par un anneau disposé en contact avec une première face axiale (52) de celui-ci contre une face frontale (44) d'un corps de soupape (38) de la soupape de commande (28) et avec une face axiale opposée (58) de celui-ci contre la surface cylindrique extérieure du tube intermédiaire (22), et dans lequel les premier et deuxième éléments d'étanchéité (48, 54) sont formés par une pièce unique en matière élastomère, de forme annulaire qui est fixée à la surface cylindrique intérieure du corps d'espacement (40).
